# EUROPÄISCHE PATENTSCHRIFT

(11) **EP 2 673 731 B1**
(45) Veröffentlichungstag und Bekanntmachung des Hinweises auf die Patenterteilung: **19.12.2018**
(21) Anmeldenummer: 12702770.4
(22) Anmeldetag: 06.02.2012
(51) Int. Cl.: G06F 21/00, G06F 21/10, G06F 21/57, G06F 21/73, H04L 9/08, H04L 9/32

(54) **VERFAHREN ZUR PROGRAMMIERUNG EINES MOBILENDGERÄTE-CHIPS**
METHOD FOR PROGRAMMING A MOBILE TERMINAL CHIP
PROCÉDÉ DE PROGRAMMATION D'UNE PUCE POUR TERMINAL MOBILE

(30) Priorität: 08.02.2011 DE 102011010627
(43) Veröffentlichungstag der Anmeldung: 18.12.2013
(73) Patentinhaber: Giesecke+Devrient Mobile Security GmbH, 81677 München (DE)
(72) Erfinder: SPITZ, Stephan, 85757 Karlsfeld (DE); DIETZE, Claus, 82395 Obersoechering (DE); GALKA, Gero, 83626 Valley (DE)
(86) Internationale Anmeldenummer: PCT/EP2012/000534
(87) Internationale Veröffentlichungsnummer: WO 2012/107200

(56) Entgegenhaltungen:
- EP-A2- 0 707 270
- EP-A2- 1 310 284
- WO-A1-03/073688
- WO-A1-2008/095193
- US-A1- 2007 296 403

## Beschreibung

Die Erfindung betrifft ein Verfahren zur Programmierung eines Mobilendgeräte-Chips, ein Verfahren zum Aktivieren eines Sicherheitsbetriebssystems unter Nutzung des Verfahrens zur Programmierung und ein Verfahren zur gesicherten Einrichtung eines einen Chip enthaltenden Mobilendgeräts unter Nutzung des Verfahrens zur Programmierung.

Mobilendgeräte wie z.B. Mobiltelefone, Smart Phones und dergleichen enthalten einen Chip (Mikroprozessorchip) mit einem integrierten Schaltkreis (IC = Integrated Circuit), auch SoC (System on Chip) genannt, durch den das Mobilendgerät einschließlich seiner Komponenten wie z.B. Display, Tastatur, Kartenleser für SIM-Karten oder/und andere Karten gesteuert wird.

Der Chip wird durch einen Chiphersteller (auch als SoC Provider bezeichnet, SoCP) hergestellt, an einen vom Chiphersteller unterschiedlichen Endgerätehersteller (auch als Original Equipment Manufacturer OEM bezeichnet) bereitgestellt, und vom Endgerätehersteller mit einem Betriebssystem programmiert (d.h. ein Betriebssystem wird in den Chip programmiert) und in ein Mobilendgerät eingebaut. Das Betriebssystem für den Chip wird in der Regel nicht durch den Endgerätehersteller erzeugt, sondern durch den Chiphersteller oder einen mit dem Chiphersteller verbundenen Betriebssystemersteller. Da im Betriebssystem Eigenheiten des Mobilendgeräts, für das der Chip vorgesehen ist, zu berücksichtigen sind, wird das Betriebssystem jedoch nicht sogleich durch den Chiphersteller sondern durch den Endgerätehersteller in den Chip programmiert. Zwischen der Herstellung des Chips und der Bereitstellung des Chips an den Endgerätehersteller werden in der Regel durch den Chiphersteller und/ oder mit dem Chiphersteller verbundene Unternehmen Programmierschritte vorgenommen, die jedoch nicht Gegenstand der vorliegenden Patentanmeldung sind.

Durch die Programmierung des Chips außerhalb des Wirkungskreises des Chipherstellers besteht ein Risiko, dass gefälschte Chips, oft Grau-Chips genannt, an den Endgerätehersteller bereitgestellt werden, die nicht vom Chiphersteller kommen, und die möglicherweise andere Eigenschaften haben als originäre Chips des Chipherstellers. Der Endgerätehersteller hat aber ein Interesse daran, originäre Chips des Chipherstellers mit zugesicherten Eigenschaften in seine Mobilendgeräte zu implementieren. Der Chiphersteller wiederum hat ein Interesse daran, dass das für seine Chips vorgesehene Betriebssystem nur in seine Chips programmiert wird, nicht jedoch in Chips anderer Herkunft.

Nach derzeitigem Stand werden zur Abwehr von Grau-Chips beim Chiphersteller Seriennummern in die Chips programmiert. Bevor beim Endgerätehersteller weitere Daten wie z.B. das Betriebssystem in einen Chip programmiert werden, wird die Seriennummer des Chips überprüft. An Hand von Seriennummernlisten, in denen alle gültigen Seriennummern vermerkt sind, kann der Endgerätehersteller erkennen, ob der Chip eine gültige Seriennummer hat. Chips ohne gültige Seriennummern werden nicht programmiert. Das Dokument WO03073688 offenbart ein Verfahren, wobei eine Seriennummer in den Chip programmiert wird.

Seriennummernlisten können sehr umfangreich sein, was ihre Handhabung mühsam und umständlich macht. Zudem bedeutet die sichere Übertragung der Seriennummernlisten zwischen dem Chiphersteller und dem Endgerätehersteller und evtl. weiteren Parteien einen hohen Aufwand.

Durch die Anmelderin der vorliegenden Patentanmeldung wird unter der Markenbezeichnung MOBICORE ein Sicherheitsbetriebssystem für in Mobil-(funk)endgeräte (z.B. Mobiltelefone, Smart Phones) zu implementierende Chips hergestellt und vertrieben. Sicherheitskritische Anwendungen und manche Systemfunktionen (z.B. Tastaturtreiber) werden durch das Sicherheitsbetriebssystem MOBICORE auf sichere Weise gesteuert. Weitere Anwendungen und andere Systemfunktionen (z.B. derzeit Displaytreiber) werden durch ein neben dem Sicherheitsbetriebssystem existierendes Normalbetriebssystem gesteuert. Das Sicherheitsbetriebssystem umfasst einen kryptographischen Schlüssel, den Authentisierungsschlüssel Kauth, mittels dessen sich das Sicherheitsbetriebssystem gegenüber einem Hintergrundsystem identifizieren kann. Wahlweise ist der Authentisierungsschlüssel Kauth zusätzlich zum Betreiben eines sicheren Kommunikationskanals zwischen dem Chip bzw. Mobilendgerät und dem Hintergrundsystem vorgesehen. Das Hintergrundsystem ist beispielsweise ein an sich bekanntes Hintergrundsystem eines Mobilfunknetzes.

Der Erfindung liegt die Aufgabe zu Grunde, ein effizientes und sicheres Verfahren zur Programmierung eines Mobilendgerät-Chips zu schaffen, bei dem die Programmierung nur höchstens für Chips aus vorbestimmtem Ursprung gewährt wird. Insbesondere soll ein solches Verfahren geschaffen werden, das ohne Seriennummernlisten auskommt. Weiter sollen gemäß Weiterbildungen der Erfindung ein Verfahren zum Aktivieren eines Sicherheitsbetriebssystems und ein. Verfahren zur gesicherten Einrichtung eines einen Chip enthaltenden Mobilendgeräts angegeben werden, jeweils unter Nutzung des Verfahrens zur Programmierung.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 ist zur Programmierung eines Chips für ein Mobilendgerät eingerichtet. Dabei wird in einem vorbereitenden Schritt eine Seriennummer in den Chip programmiert. Nachfolgend wird in einem Programmierschritt die Seriennummer verifiziert und eine Programmierung zumindest eines weiteren Datums in den Chip nur durchgeführt, falls die Seriennummer erfolgreich verifiziert worden ist. Das Verfahren zeichnet sich dadurch aus, dass die Seriennummer mittels eines Sicherheitsmoduls, unter Verwendung einer im Sicherheitsmodul abgespeicherten Geheiminformation, die von der Seriennummer unterschiedlich ist, verifizierbar ist. Unter dem "weiteren Datum" wird hierbei jegliche Art von Daten verstanden, beispielsweise Programmcode (z.B. ein Betriebssystem, vgl. weiter unten) oder Einzeldaten (z.B. ein kryptographischer (Authentisierungs-) Schlüssel), die zum Zusammenwirken mit Programmcode vorgesehen sind.

Dadurch, dass die Seriennummer unter Verwendung der im Sicherheitsmodul abgespeicherten Geheiminformation verifizierbar ist, wird zur Verifizierung der Seriennummer lediglich das Sicherheitsmodul benötigt, jedoch keine Seriennummernliste. Das Verfahren ist somit mindestens ebenso sicher wie ein Verfahren mit einer Seriennummernprüfung an Hand von Seriennummernlisten, aber wesentlich effizienter, da keine Seriennummernlisten gehandhabt werden müssen.

Die Erfindung ist in den beigefügten Ansprüchen offenbart. Daher ist gemäß Anspruch 1 ein effizientes und sicheres Verfahren zur Programmierung eines Mobilendgerät-Chips mit Ursprungsprüfung für den Chip geschaffen.

Wahlweise wird in Reaktion auf die erfolgreiche Verifizierung der Seriennummer das weitere Datum mittels des Sicherheitsmodul unmittelbar, und ohne Einwirkungsmöglichkeit von außerhalb des Sicherheitsmoduls in den Chip programmiert. Hierdurch wird erreicht, dass nach der erfolgreichen Verifizierung der Seriennummer ausschließlich dem Chip, dessen Seriennummer soeben verifiziert worden ist, das weitere Datum zugeteilt und einprogrammiert werden kann. Ein Austausch des Chips gegen einen anderen Chip nach der Verifizierung der Seriennummer und vor der Programmierung des weiteren Datums in den Chip ist dagegen nicht möglich. Somit ist sichergestellt, dass nur Chips aus echtem Ursprung das weitere Datum einprogrammiert bekommen.

Wahlweise wird die Seriennummer verifiziert, indem unter Verwendung der Geheiminformation die Seriennummer oder eine von der Seriennummer abhängige Information reproduziert, also nochmals erzeugt, wird. Im zweiten Fall wird im vorbereitenden Schritt vorzugsweise zusätzlich die von der Seriennummer abhängige Information in den Chip programmiert.

Gemäß einer ersten Ausführungsform wird die Seriennummer durch eine Abbildungsvorschrift gebildet und ist als Geheiminformation die Abbildungsvorschrift im Sicherheitsmodul abgespeichert. In diesem Fall wird zur Verifizierung der Seriennummer die Seriennummer mittels des Sicherheitsmoduls aus dem Chip ausgelesen, die Seriennummer mittels der abgespeicherten Abbildungsvorschrift im Sicherheitsmodul erneut erzeugt, ausgelesene und neu erzeugte Seriennummer - vorzugsweise auch im Sicherheitsmodul - verglichen, und bei Übereinstimmung die Seriennummer als verifiziert angesehen. Die Abbildungsvorschrift verarbeitet Eingangsdaten, die z.B. eine Zufallszahl und weitere Daten umfassen können, und erzeugt daraus die Seriennummer.

Gemäß einer zweiten Ausführungsform wird zusätzlich zur Seriennummer eine unter Verwendung der Seriennummer und eines geheimen Schlüssels gebildete digitale Signatur im Chip abgespeichert und ist als Geheiminformation der geheime Schlüssel im Sicherheitsmodul abgespeichert. In diesem Fall werden zur Verifizierung der Seriennummer die Seriennummer und die digitale Signatur mittels des Sicherheitsmoduls aus dem Chip ausgelesen, die Signatur wird mittels der ausgelesenen Seriennummer und des im Sicherheitsmodul abgespeicherten geheimen Schlüssels im Sicherheitsmodul erneut erzeugt, die ausgelesene und die neu erzeugte Signatur werden - vorzugsweise auch im Sicherheitsmodul - verglichen, und bei Übereinstimmung der Signaturen wird die Seriennummer als verifiziert angesehen.

Wahlweise ist die Geheiminformation gegen Auslesen gesichert im Sicherheitsmodul abgespeichert. Beispielsweise ist ein direktes Auslesen der Geheiminformation nicht oder nur höchstens nach erfolgreicher Authentisierung gegenüber dem Sicherheitsmodul möglich. Die Geheiminformation wird innerhalb des Sicherheitsmoduls zur Verifizierung der Seriennummer des Chips verwendet, ohne aus dem Sicherheitsmodul heraus zu gelangen.

Wahlweise ist als weiteres Datum ein Sicherheitsbetriebssystem oder zumindest ein Teil eines Sicherheitsbetriebssystems vorgesehen. Beispielsweise wird im Programmierschritt das Sicherheitsbetriebssystem nur in dem Fall in den Chip programmiert, in dem die Seriennummer erfolgreich verifiziert worden ist.

Wahlweise ist als weiteres Datum ein für eine Funktionsfähigkeit eines in dem Chip implementierten oder noch zu implementierenden Sicherheitsbetriebssystems erforderlicher kryptographischer Schlüssel, z.B. Authentisierungsschlüssel, vorgesehen. Das Sicherheitsbetriebssystem selbst wird wahlweise vor oder nach der Verifizierung der Seriennummer in den Chip programmiert, oder alternativ teils vorher und teils nachher. Wahlweise ist als weiteres Datum der Authentisierungsschlüssel Kauth des eingangs beschriebenen Sicherheitsbetriebssystems MOBICORE vorgesehen.

Wahlweise wird der kryptographische Schlüssel, z.B. Authentisierungsschlüssel, im Sicherheitsmodul erzeugt, wahlweise unmittelbar in Reaktion auf die erfolgreiche Verifizierung der Seriennummer. Der erzeugte Schlüssel wir anschließend in den Chip programmiert, wahlweise ohne Einwirkungsmöglichkeit von außerhalb des Sicherheitsmoduls.

Wahlweise wird der kryptographische Schlüssel unter Verwendung der Seriennummer erzeugt. Hierdurch ist der kryptographische Schlüssel von der Seriennummer abhängig, und damit ist der kryptographische Schlüssel ebenso wie die Seriennummer einzigartig für den Chip.

Ein Verfahren zum Aktivieren eines Sicherheitsbetriebssystems wird durch ein Verfahren zur Programmierung eines Chips durchgeführt, bei dem wie obenstehend beschrieben, im vorbereitenden Schritt die Seriennummer in den Chip programmiert wird. Als weiteres Datum ist ein für eine Funktionsfähigkeit eines Sicherheitsbetriebssystems erforderlicher kryptographischer Schlüssel, insbesondere Authentisierungsschlüssel, vorgesehen. Bei dem Verfahren zum Aktivieren des Sicherheitsbetriebssystems wird zusätzlich das Sicherheitsbetriebssystem mit Ausnahme des kryptographischen Schlüssels in den Chip programmiert und hierdurch im Chip implementiert. Im Programmierschritt wird die Programmierung des kryptographischen Schlüssels in den Chip nur durchgeführt, falls die Seriennummer erfolgreich verifiziert worden ist. Indem der Schlüssel in den Chip programmiert wird, wird das Sicherheitsbetriebssystem aktiviert und ist somit ab diesem Programmiervorgang funktionsfähig.

Das Verfahren ist besonders vorteilhaft einsetzbar bei einer arbeitsteiligen Programmierung eines Chips für ein Mobilendgerät, wobei die Programmierung des Chips beispielsweise zwischen einem Chiphersteller und einem Endgerätehersteller (z.B. Mobilfunkendgerätehersteller) aufgeteilt ist.

Wahlweise wird der vorbereitende Schritt durch einen ersten Programmierer (z.B. Chiphersteller) durchgeführt und der Programmierschritt durch einen vom ersten Programmierer logisch oder/ und räumlich getrennten zweiten Programmierer (z.B. Endgerätehersteller) durchgeführt. Da die Verifizierung der Seriennummern ohne Seriennummernlisten auskommt und lediglich das Sicherheitsmodul erfordert, entfällt der bisher erforderliche Austausch von Seriennummernlisten zwischen dem ersten und dem zweiten Programmierer, also z.B. zwischen dem Chiphersteller und dem Endgerätehersteller.

Wahlweise wird die Geheiminformation durch den ersten Programmierer (z.B. Chiphersteller) in das Sicherheitsmodul programmiert und das Sicherheitsmodul für die Durchführung des Programmierschritts an den zweiten Programmierer (z.B. Endgerätehersteller) bereitgestellt.

Das Sicherheitsmodul ist wahlweise als Komplettsystem mit einem Kryptoprozessor, einem Speicher für Geheiminformationen und einer Steuereinheit zur Chipprogrammierung gestaltet. Wahlweise ist der Speicher ausschließlich durch den Kryptoprozessor auslesbar. Der Kryptoprozessor ist dazu eingerichtet, unter Verwendung von im Speicher abgespeicherter Geheiminformation kryptographische Berechnungen durchzuführen, z.B. Signaturberechnungen, Seriennummernberechnungen gemäß Algorithmen, Vergleichsoperationen, Schlüsselgenerierung, insbesondere Erzeugung eines Authentisierungsschlüssels Kauth für ein Mobicore Sicherheitsbetriebssystem. Die Steuereinheit zur Chipprogrammierung ist dazu eingerichtet, Chips zu programmieren. Vorzugsweise sind der Kryptoprozessor und die Steuereinheit zur Chipprogrammierung derart miteinander gekoppelt, dass die Chipprogrammierung durch Rechenergebnisse des Kryptoprozessors unmittelbar steuerbar ist.

Gemäß einer ersten Weiterbildung der Erfindung wird im Programmierschritt in dem Sicherheitsmodul ein zumindest die Geheiminformation umfassender Verifizierungsdatensatz erzeugt, mittels dessen die Seriennummer verifizierbar ist. Der Verifizierungsdatensatz wird an ein Hintergrundsystem gesendet. In einem zeitlich nach dem Programmierschritt liegenden Verifizierungsschritt wird mittels des Verifizierungsdatensatzes die Seriennummer beim Hintergrundsystem nochmals verifiziert, wobei der Chip akzeptiert wird, falls die Seriennummer im Verifizierungsschritt erfolgreich verifiziert worden ist und der Chip verworfen wird, falls die Seriennummer im Verifizierungsschritt nicht erfolgreich verifiziert worden ist. Der Verifizierungsschritt wird beispielsweise anlässlich der Registrierung eines den Chip enthaltenden Mobilendgeräts beim Hintergrundsystem durchgeführt.

Wahlweise wird bei der ersten Weiterbildung der Erfindung im Programmierschritt, als zumindest ein Teil des Verifizierungsdatensatzes, ein von dem Schlüssel und der Seriennummer abhängiges Schlüssel-Seriennummer-Datum erzeugt, beispielsweise, indem der Schlüssel und die Seriennummer mittels eines Algorithmus G zu dem Schlüssel-Seriennummer-Datum verarbeitet werden, und an das Hintergrundsystem gesendet. Im Verifizierungsschritt wird mittels des Verifizierungsdatensatzes, zusätzlich zur Seriennummer oder anstatt der Seriennummer, das Schlüssel-Seriennummer-Datum verifiziert, beispielsweise, indem das Schlüssel-Seriennummer-Datum nochmals berechnet wird. Bedarfsweise umfasst der Verifizierungsdatensatz den Algorithmus G.

Bei einem erfindungsgemäßen Verfahren zur gesicherten Einrichtung eines einen Chip enthaltenden Mobilendgeräts für ein Mobilfunksystem, gemäß einer zweiten Weiterbildung der Erfindung, wird an dem Chip ein vorbereitender Schritt (umfassend insbesondere Einprogrammieren der Seriennummer und ggf. der Signatur) und ein Programmierschritt (umfassend insbesondere Verifizieren der Seriennummer und ggf. Einprogrammieren des weiteren Datums, z.B. (Authentisierungs-) Schlüssel) durchgeführt, wie vorstehend beschrieben. Anschließend wird der Chip mit einem Hintergrundsystem des Mobilfunksystems in Datenaustauschverbindung gebracht, um das Mobilendgerät beim Hintergrundsystem zu registrieren, mit dem Ziel, dass das Mobilendgerät anschließend im Mobilfunksystem nutzbar ist, z.B. zum Telefonieren, Datenaustausch und sonstige für Mobilendgeräte übliche Anwendungen. Nachfolgend wird, z.B. über die Datenaustauschverbindung, ein zweiter Verifizierungsschritt gemäß der Weiterbildung der Erfindung durchgeführt. Nur im Fall, dass im zweiten Verifizierungsschritt die Seriennummer oder / und das Schlüssel-Seriennummer-Datum erfolgreich verifiziert worden ist, wird das Mobilfunkgerät beim Hintergrundsystem registriert. Hierdurch ist im Lebenszyklus des Mobilendgeräts eine weitere Sicherung eingebaut, durch die sichergestellt wird, dass nur Mobilendgeräte mit einem originären Chip - und ggf. originären Sicherheitsbetriebssystem - am Mobilfunksystem teilnehmen können.

Im Folgenden wird die Erfindung an Hand von Ausführungsbeispielen und unter Bezugnahme auf die Zeichnung näher erläutert, in der zeigen:
- Fig. 1: ein System zur Veranschaulichung einer ersten Ausführungsform der Erfindung, umfassend eine erste Weiterbildung;
- Fig. 2: ein System zur Veranschaulichung einer zweiten Ausführungsform der Erfindung, umfassend die erste Weiterbildung;
- Fig. 3: ein System zur Veranschaulichung einer zweiten Weiterbildung der Erfindung.

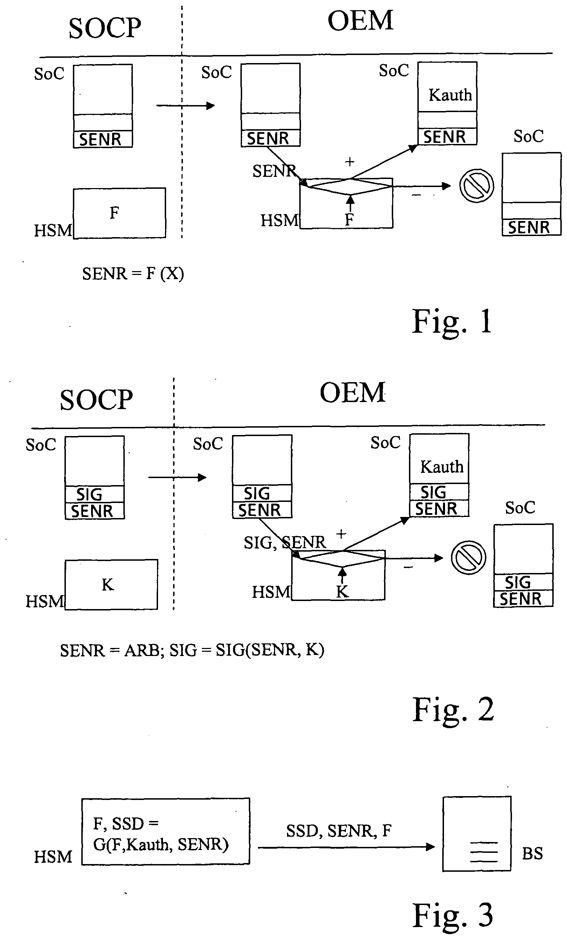

Fig. 1 zeigt ein System zur Veranschaulichung einer ersten Ausführungsform der Erfindung, bei der die Programmierung eines Chips SoC für ein Mobilfunkendgerät mittels einer Seriennummer SENR abgesichert ist, die gemäß einer geheimen Abbildungsvorschrift F gebildet ist. Das Ziel der Programmierung ist, in einen durch einen Chiphersteller SOCP (SOC Provider) hergestellten Chip SoC (System on Chip) durch einen Mobilfunk-Endgerätehersteller OEM (Original Equipment Manufacturer) ein Sicherheitsbetriebssystem programmieren zu lassen. Dabei soll sichergestellt werden, dass nur originäre Chips des Chiphersteller SOCP mit einem funktionsfähigen Sicherheitsbetriebssystem versehen werden. Das Sicherheitsbetriebssystem umfasst einen Authentisierungsschlüssel Kauth, ohne den das Sicherheitsbetriebssystem nicht funktionsfähig ist. Der Chiphersteller SOCP programmiert in den Chip SoC die gemäß der geheimen Abbildungsvorschrift F gebildete Seriennummer SENR und in ein Sicherheitsmodul HSM (High Security Module) die geheime Abbildungsvorschrift F. Der Chiphersteller SOCP liefert den Chip SoC und das Sicherheitsmodul HSM an den Endgerätehersteller OEM. In der Regel liefert der Chiphersteller SOCP eine Vielzahl von derartig vorbereiteten Chips SoC an den Endgerätehersteller OEM. Der Endgerätehersteller OEM integriert das Sicherheitsmodul HSM bestimmungsgemäß in seine Produktionskette zur Chipprogrammierung. Hierdurch ist jeder Programmiervorgang zur Programmierung des Chips SoC durch das Sicherheitsmodul HSM gesteuert und dabei ausschließlich unter Steuerung des Sicherheitsmoduls HSM möglich. Zunächst programmiert der Endgerätehersteller OEM das Sicherheitsbetriebssystem mit Ausnahme des Authentisierungsschlüssels Kauth in den Chip SoC. Der Authentisierungsschlüssel Kauth existiert zu diesem Zeitpunkt noch nicht. Sobald beim Endgerätehersteller OEM ein Programmierbefehl erteilt wird, den Authentisierungsschlüssel Kauth in den Chip SoC zu programmieren, liest das Sicherheitsmodul HSM aus dem Chip SoC die Seriennummer SENR aus, bildet mittels der ausgelesenen Seriennummer SENR und der im Sicherheitsmodul HSM abgespeicherten geheimen Abbildungsvorschrift F die Seriennummer SENR erneut und vergleicht die ausgelesene und die erneut gebildete Seriennummer SENR. Nur falls die ausgelesene und die erneut gebildete SENR übereinstimmen, wird im Sicherheitsmodul HSM die Seriennummer als verifiziert angesehen und direkt in Reaktion auf die Verifizierung im Sicherheitsmodul HSM der Authentisierungsschlüssel Kauth erzeugt. Der Authentisierungsschlüssel Kauth wird durch eine kryptographische Berechnung aus der Seriennummer SENR und weiteren Eingangsdaten erzeugt, so dass also der Authentisierungsschlüssel Kauth einzigartig und für den Chip SoC spezifisch ist, ebenso wie die Seriennummer SENR. Der erzeugte Authentisierungsschlüssel Kauth wird in den Chip SoC programmiert, ohne Einwirkungsmöglichkeit von außerhalb des Sicherheitsmoduls HSM. Hierdurch wird das Sicherheitsbetriebssystem aktiviert. Falls die Seriennummern dagegen unterschiedlich sind, wird eine Fehlermeldung ausgegeben und/ oder die Chipprogrammierung abgebrochen, wahlweise auch eine Fehlerbehandlungsmaßnahme ergriffen, wie z.B. Löschen von Speichern des Chips SoC. Das Sicherheitsbetriebssystem wird in diesem Fall also nicht aktiviert.

Fig. 2 zeigt ein System zur Veranschaulichung einer zweiten Ausführungsform der Erfindung, bei der die Programmierung eines Chips SoC für ein Mobilfunkendgerät mittels einer Seriennummer SENR und einer Signatur SIG über die Seriennummer SENR abgesichert ist. Die Rahmenbedingen der Chipprogrammierung sind wie bei Fig. 1 beschrieben. Im Unterschied zur Ausführungsform aus Fig. 1 programmiert der Chiphersteller SoCP bei der Ausführungsform aus Fig. 2 die Seriennummer SENR und eine durch Verschlüsselung der Seriennummer SENR mit einem geheimen kryptographischen Schlüssel K erzeugte Signatur SIG in den Chip SoC. Zudem programmiert der Chiphersteller SOCP den geheimen kryptographischen Schlüssel K in das Sicherheitsmodul HSM. Sobald ein Programmierbefehl erteilt wird, den Authentisierungsschlüssel Kauth in den Chip SoC zu programmieren, liest das Sicherheitsmodul HSM aus dem Chip SoC die Signatur SIG und die Seriennummer SENR aus, bildet mittels der ausgelesenen Seriennummer SENR und des im Sicherheitsmodul HSM abgespeicherten geheimen Schlüssels K die Signatur SIG erneut und vergleicht die ausgelesene und die erneut gebildete Signatur SIG. Falls die Signaturen unterschiedlich sind, wird eine Fehlermeldung ausgegeben und/oder die Chipprogrammierung abgebrochen, wahlweise auch eine Fehlerbehandlungsmaßnahme ergriffen, wie z.B. Löschen von Speichern des Chips SoC. Falls abgespeicherte und neu gebildete Signatur SIG übereinstimmen, wird die Seriennummer SENR als verifiziert angesehen. In Reaktion auf die Verifizierung wird, wie bei Fig. 1 beschrieben, der Authentisierungsschlüssel Kauth gebildet (berechnet) und in den Chip SoC programmiert, und somit das Sicherheitsbetriebssystem aktiviert.

Fig. 3 zeigt ein System zur Darstellung von Weiterbildungen der Erfindung, mit dem zusätzlichen Schritt der Registrierung eines den Chip SoC enthaltenden Mobilendgeräts bei einem Hintergrundsystem BS eines Mobilfunksystems. Bis zur Verifizierung der Seriennummer SENR im Sicherheitsmodul HSM und ggf. Erzeugung des Authentisierungsschlüssels Kauth und Abspeicherung desselben im Sicherheitsmodul HSM ist der Verfahrensablauf der gleiche wie an Hand von Fig. 1 oder Fig. 2 beschrieben. Zusätzlich wird, nachdem im Sicherheitsmodul HSM der Authentisierungsschlüssel Kauth erzeugt und in den Chip SoC programmiert worden ist, mittels eines Algorithmus G und unter Verwendung der Geheiminformation (Algorithmus F oder Schlüssel K) und der Seriennummer SENR ein Schlüssel-Seriennummer-Datum SSD = G(F, Kauth, SENR) bzw. SSD = G(K, Kauth, SENR) erzeugt. Das Schlüssel-Seriennummer-Datum SSD, die Seriennummer SENR und die Geheiminformation, F oder K, stellen einen Verifizierungsdatensatz für eine spätere Verifizierung der Serienummer des Chips SoC dar. Der Verifizierungsdatensatz wird über eine gesicherte Datenverbindung, die der Endgerätehersteller OEM nicht beeinflussen kann, an ein Hintergrundsystem BS eines Mobilfunksystems gesendet. Später, nachdem das Mobilendgerät, in dem der Chip SoC enthalten ist, an einen Endkunden verkauft ist, muss das Mobilendgerät, um im Mobilfunksystem funktionsfähig zu sein, beim Hintergrundsystem BS erstmalig registriert werden. Anlässlich des Versuchs, das Mobilendgerät beim Hintergrundsystem BS zu registrieren, wird mittels des Schlüssel-Seriennummer-Datums SSD die Seriennummer SENR des Chips SoC nochmals verifiziert. Nur falls die Seriennummer SENR erfolgreich verifiziert wird, wird das Mobilendgerät beim Hintergrundsystem BS registriert und hierdurch die Teilnahme am Mobilfunksystem mit dem Mobilendgerät ermöglicht.

## Patentansprüche

1. Verfahren zur Programmierung eines Chips (SoC) für ein Mobilendgerät, wobei
- in einem vorbereitenden Schritt eine Seriennummer (SENR) in den Chip (SoC) programmiert wird und
- nachfolgend in einem Programmierschritt die Seriennummer (SENR) verifiziert wird und eine Programmierung zumindest eines weiteren Datums (Kauth) in den Chip (SoC) nur durchgeführt wird, falls die Seriennummer (SENR) erfolgreich verifiziert worden ist,
wobei die Seriennummer (SENR) mittels eines Sicherheitsmoduls (HSM), unter Verwendung einer im Sicherheitsmodul (HSM) abgespeicherten Geheiminformation (F, K), die von der Seriennummer (SENR) unterschiedlich ist, verifiziert wird, und dass als weiteres Datum ein für eine Funktionsfähigkeit eines in dem Chip (SoC) implementierten oder noch zu implementierenden Sicherheitsbetriebssystems erforderlicher kryptographischer Schlüssel (Kauth) vorgesehen ist.

2. Verfahren nach Anspruch 1, wobei die Seriennummer (SENR) verifiziert wird, indem unter Verwendung der Geheiminformation (F, K) die Seriennummer (SENR) oder eine von der Seriennummer (SENR) abhängige Information (SIG) reproduziert wird.

3. Verfahren nach Anspruch 1 oder 2, wobei die Seriennummer (SENR) durch eine geheime Abbildungsvorschrift (F) gebildet wird und als Geheiminformation die Abbildungsvorschrift (F) im Sicherheitsmodul (HSM) abgespeichert ist.

4. Verfahren nach Anspruch 1 oder 2, wobei zusätzlich zur Seriennummer (SENR) eine unter Verwendung der Seriennummer (SENR) und eines geheimen Schlüssels (K) gebildete digitale Signatur (SIG) im Chip (SoC) abgespeichert wird und als Geheiminformation der geheime Schlüssel (K) im Sicherheitsmodul (HSM) abgespeichert ist.

5. Verfahren nach einem der Ansprüche 1 bis 4, wobei die Geheiminformation (F, K) gegen Auslesen gesichert im Sicherheitsmodul (HSM) abgespeichert ist.

6. Verfahren nach einem der Ansprüche 1 bis 5, wobei als weiteres Datum ein Sicherheitsbetriebssystem oder zumindest ein Teil eines Sicherheitsbetriebssystems vorgesehen ist.

7. Verfahren nach Anspruch 6, wobei der kryptographische Schlüssel (Kauth) im Sicherheitsmodul (HSM) erzeugt wird.

8. Verfahren nach Anspruch 6 oder 7, wobei der kryptographische Schlüssel (Kauth) unter Verwendung der Seriennummer (SENR) erzeugt wird.

9. Verfahren zum Aktivieren eines Sicherheitsbetriebssystems durch ein Verfahren zur Programmierung nach einem der Ansprüche 6 bis 8, wobei
- zusätzlich das Sicherheitsbetriebssystem mit Ausnahme des kryptographischen Schlüssels (Kauth) in den Chip (SoC) programmiert und hierdurch implementiert wird und
- im Programmierschritt die Programmierung des kryptographischen Schlüssels (Kauth) in den Chip (SoC) nur durchgeführt wird, falls die Seriennummer (SENR) erfolgreich verifiziert worden ist.

10. Verfahren nach einem der Ansprüche 1 bis 9, wobei der vorbereitende Schritt durch einen ersten Programmierer (SoCP) durchgeführt wird und wobei der Programmierschritt durch einen vom ersten Programmierer (SoCP) logisch oder/ und räumlich getrennten zweiten Programmierer (OEM) durchgeführt wird.

11. Verfahren nach Anspruch 10, wobei die Geheiminformation (F, K) durch den ersten Programmierer (SoCP) in das Sicherheitsmodul (HSM) programmiert wird und das Sicherheitsmodul (HSM) für den Programmierschritt an den zweiten Programmierer (OEM) bereitgestellt wird.

12. Verfahren nach einem der Ansprüche 1 bis 11, wobei
- im Programmierschritt in dem Sicherheitsmodul (HSM) ein zumindest die Geheiminformation (F, K) umfassender Verifizierungsdatensatz erzeugt wird, mittels dessen die Seriennummer (SENR) verifizierbar ist, und der Verifizierungsdatensatz an ein Hintergrundsystem (BS) gesendet wird, und
- in einem zeitlich nach dem Programmierschritt liegenden Verifizierungsschritt mittels des Verifizierungsdatensatzes die Seriennummer (SENR) beim Hintergrundsystem (BS) nochmals verifiziert wird, wobei der Chip (SoC) akzeptiert wird, falls die Seriennummer (SENR) im Verifizierungsschritt erfolgreich verifiziert worden ist und der Chip (SoC) verworfen wird, falls die Seriennummer (SENR) im Verifizierungsschritt nicht erfolgreich verifiziert worden ist.

13. Verfahren nach Anspruch 12, wobei
- im Programmierschritt, als zumindest ein Teil des Verifizierungsdatensatzes, ein von dem Schlüssel (Kauth) und der Seriennummer (SENR) abhängiges Schlüssel-Seriennummer-Datum erzeugt wird und an das Hintergrundsystem (BS) gesendet wird, und
- im Verifizierungsschritt mittels des Verifizierungsdatensatzes, zusätzlich zur Seriennummer (SENR) oder anstatt der Seriennummer (SENR), das Schlüssel-Seriennummer-Datum verifiziert wird.

14. Verfahren zur gesicherten Einrichtung eines einen Chip (SoC) enthaltenden Mobilendgeräts für ein Mobilfunksystem, wobei
- an dem Chip (SoC) ein vorbereitender Schritt und ein Programmierschritt nach einem der Ansprüche 1 bis 13 durchgeführt wird,
- der Chip (SoC) mit einem Hintergrundsystem (BS) des Mobilfunksystems in Datenaustauschverbindung gebracht wird, um das Mobilendgerät beim Hintergrundsystem zu registrieren,
- ein Verifizierungsschritt nach Anspruch 12 oder 13 durchgeführt wird, und
- nur im Fall, dass im Verifizierungsschritt die Seriennummer (SENR) oder / und das Schlüssel-Seriennummer-Datum erfolgreich verifiziert worden ist, das Mobilfunkgerät beim Hintergrundsystem (BS) registriert wird.

## Claims

1. A method for programming a chip (SoC) for a mobile end device,
wherein
- in a preparatory step a serial number (SENR) is programmed into the chip (SoC), and
- thereafter, in a programming step, the serial number (SENR) is verified and a programming of at least one further datum (Kauth) into the chip (SoC) is only carried out if the serial number (SENR) has been successfully verified,
wherein
the serial number (SENR) is verified by means of a security module (HSM), while employing a secret information item (F, K) stored in the security module (HSM) and different from the serial number (SENR), and that as the further datum a cryptographic key (Kauth) required for an operability of a security operating system implemented, or yet to be implemented, in the chip (SoC) is provided.

2. The method according to claim 1, wherein the serial number (SENR) is verified by the serial number (SENR) or an information item (SIG) dependent on the serial number (SENR) being reproduced while employing the secret information item (F, K).

3. The method according to claim 1 or 2, wherein the serial number (SENR) is formed by a secret mapping rule (F), and the mapping rule (F) is stored in the security module (HSM) as the secret information item.

4. The method according to claim 1 or 2, wherein, in addition to the serial number (SENR), a digital signature (SIG) formed while employing the serial number (SENR) and a secret key (K) is stored in the chip (SoC), and the secret key (K) is stored in the security module (HSM) as the secret information item.

5. The method according to any of claims 1 to 4, wherein the secret information item (F, K) is stored in the security module (HSM) so as to be secured against readout.

6. The method according to any of claims 1 to 5, wherein a security operating system or at least a part of a security operating system is provided as the further datum.

7. The method according to claim 6, wherein the cryptographic key (Kauth) is generated in the security module (HSM).

8. The method according to claim 6 or 7, wherein the cryptographic key (Kauth) is generated while employing the serial number (SENR).

9. A method for activating a security operating system through a programming method according to any of claims 6 to 8, wherein
- additionally the security operating system with the exception of the cryptographic key (Kauth) is programmed into the chip (SoC) and thereby implemented, and
- in the programming step the programming of the cryptographic key (Kauth) into the chip (SoC) is only carried out if the serial number (SENR) has been successfully verified.

10. The method according to any of claims 1 to 9, wherein the preparatory step is carried out by a first programmer (SoCP) and wherein the programming step is carried out by a second programmer (OEM) separated logically and/or spatially from the first programmer (SoCP).

11. The method according to claim 10, wherein the secret information item (F, K) is programmed into the security module (HSM) by the first programmer (SoCP), and the security module (HSM) is made available to the second programmer (OEM) for the programming step.

12. The method according to any of claims 1 to 11, wherein
- in the programming step there is generated in the security module (HSM) a verification data set comprising at least the secret information item (F, K), by means of which data set the serial number (SENR) is verifiable, and the verification data set is sent to a background system (BS), and
- in a verification step temporally following the programming step, the serial number (SENR) is verified again with the background system (BS) by means of the verification data set, the chip (SoC) being accepted if the serial number (SENR) has been successfully verified in the verification step, and the chip (SoC) being discarded if the serial number (SENR) has not been successfully verified in the verification step.

13. The method according to claim 12, wherein
- in the programming step a key-serial number datum dependent on the key (Kauth) and the serial number (SENR) is generated as at least a part of the verification data set and sent to the background system (BS), and
- in the verification step the key-serial number datum is verified, in addition to the serial number (SENR) or instead of the serial number (SENR), by means of the verification data set.

14. A method for securely configuring a mobile end device containing a chip (SoC), for a mobile radio system, wherein
- on the chip (SoC) a preparatory step and a programming step according to any of claims 1 to 13 are carried out,
- the chip (SoC) is brought into data exchange connection with a background system (BS) of the mobile radio system in order to register the mobile end device with the background system,
- a verification step according to claim 12 or 13 is carried out, and
- only in the case that the serial number (SENR) or/and the key-serial number datum has been successfully verified in the verification step is the mobile radio device registered with the background system (BS).

## Revendications

1. Procédé de programmation d'une puce (SoC) pour un terminal mobile, cependant que
- dans une étape préparatoire, un numéro de série (SENR) est programmé dans la puce (SoC), et
- ensuite, dans une étape de programmation, le numéro de série (SENR) est vérifié, et une programmation d'au moins une autre donnée (Kauth) dans la puce (SoC) n'est effectuée que si le numéro de série (SENR) a été vérifié avec succès,
cependant que
le numéro de série (SENR) est vérifié au moyen d'un module de sécurité (HSM) en utilisant une information secrète (F, K) mémorisée dans le module de sécurité (HSM) et différente du numéro de série (SENR), et que, en tant qu'autre donnée, une clé cryptographique (Kauth) nécessaire pour une capacité de fonctionnement d'un système d'exploitation de sécurité implémenté ou encore à implémenter dans la puce (SoC) est prévue.

2. Procédé selon la revendication 1, cependant que le numéro de série (SENR) est vérifié en ce que, en utilisant l'information secrète (F, K), le numéro de série (SENR) ou une information (SIG) dépendant du numéro de série (SENR) est reproduite.

3. Procédé selon la revendication 1 ou 2, cependant que le numéro de série (SENR) est constitué par une spécification secrète de représentation (F), et que, en tant qu'information secrète, la spécification de représentation (F) est mémorisée dans le module de sécurité (HSM).

4. Procédé selon la revendication 1 ou 2, cependant que, en plus du numéro de série (SENR), une signature numérique (SIG) constituée en utilisant le numéro de série (SENR) et une clé secrète (K) est mémorisée dans la puce (SoC), et que, en tant qu'information secrète, la clé secrète (K) est mémorisée dans le module de sécurité (HSM).

5. Procédé selon une des revendications de 1 à 4, cependant que l'information secrète (F, K) est mémorisée de manière sécurisée contre la lecture dans le module de sécurité (HSM).

6. Procédé selon une des revendications de 1 à 5, cependant que, en tant qu'autre donnée, un système d'exploitation de sécurité ou au moins une partie d'un système d'exploitation de sécurité est prévu.

7. Procédé selon la revendication 6, cependant que la clé cryptographique (Kauth) est générée dans le module de sécurité (HSM).

8. Procédé selon la revendication 6 ou 7, cependant que la clé cryptographique (Kauth) est générée en utilisant le numéro de série (SENR).

9. Procédé d'activation d'un système d'exploitation de sécurité par un procédé de programmation selon une des revendications de 6 à 8, cependant que
- en plus, le système d'exploitation de sécurité est, à l'exception de la clé cryptographique (Kauth), programmé dans la puce (SoC) et par cela implémenté, et
- dans l'étape de programmation, la programmation de la clé cryptographique (Kauth) dans la puce (SoC) n'est effectuée que si le numéro de série (SENR) a été vérifié avec succès.

10. Procédé selon une des revendications de 1 à 9, cependant que l'étape préparatoire est effectuée par un premier programmeur (SoCP), et cependant que l'étape de programmation est effectuée par un deuxième programmeur (OEM) logiquement et / ou spatialement séparé du premier programmeur (SoCP).

11. Procédé selon la revendication 10, cependant que l'information secrète (F, K) est programmée par le premier programmeur (SoCP) dans le module de sécurité (HSM), et que le module de sécurité (HSM) est, pour l'étape de programmation, mis à disposition au deuxième programmeur (OEM).

12. Procédé selon une des revendications de 1 à 11, cependant que
- dans l'étape de programmation, dans le module de sécurité (HSM), un jeu de données de vérification comprenant au moins l'information secrète (F, K) est généré, au moyen duquel le numéro de série (SENR) peut être vérifié, et que le jeu de données de vérification est envoyé à un système d'arrière-plan (BS), et que
- dans une étape de vérification temporellement située après l'étape de programmation, au moyen du jeu de données de vérification, le numéro de série (SENR) est encore une fois vérifié au système d'arrière-plan (BS), cependant que la puce (SoC) est acceptée si le numéro de série (SENR) a été vérifié avec succès dans l'étape de vérification, et que la puce (SoC) est rejetée si le numéro de série (SENR) n'a pas été vérifié avec succès dans l'étape de vérification.

13. Procédé selon la revendication 12, cependant que
- dans l'étape de programmation, en tant qu'au moins une partie du jeu de données de vérification, une donnée de numéro de série de clé dépendant de la clé (Kauth) et du numéro de série (SENR) est générée et est envoyée au système d'arrière-plan (BS), et
- dans l'étape de vérification, au moyen du jeu de données de vérification, en plus du numéro de série (SENR) ou à la place du numéro de série (SENR), la donnée de numéro de série de clé est vérifiée.

14. Procédé d'installation sécurisée d'un terminal mobile contenant une puce (SoC) pour un système de radiocommunication mobile, cependant que
- à la puce (SoC), une étape préparatoire et une étape de programmation est effectuée selon une des revendications de 1 à 13,
- la puce (SoC) est mise en connexion d'échange de données avec un système d'arrière-plan (BS) du système de radiocommunication mobile afin d'enregistrer le terminal mobile dans le système d'arrière-plan,
- une étape de vérification selon la revendication 12 ou 13 est effectuée, et
- uniquement dans le cas où, dans l'étape de vérification, le numéro de série (SENR) et / ou la donnée de numéro de série de clé a été vérifiée avec succès, le terminal mobile est enregistré dans le système d'arrière-plan (BS).
